# EUROPEAN PATENT APPLICATION

(11) **EP 4 744 912 A1**
(43) Date of publication of application: **20.05.2026**
(21) Application number: 24903230.1
(22) Date of filing: 08.08.2024
(51) Int. Cl.: B60C 19/00, B60C 7/00, B60C 9/22

(54) **TIRE AND NON-PNEUMATIC TIRE**

(30) Priority: 12.12.2023 JP 2023209536; 13.12.2023 JP 2023210557
(71) Applicant: BRIDGESTONE CORPORATION, Chuo-ku Tokyo 104-8340 (JP)
(72) Inventor: KAMADA, Takehito, Tokyo 104-8340 (JP); SUKEGAWA, Shin, Tokyo 104-8340 (JP); ITO, Yujiro, Tokyo 104-8340 (JP); HOSHINO, Hironori, Tokyo 104-8340 (JP)
(74) Representative: Marks & Clerk LLP
(86) International application number: PCT/JP2024/028556
(87) International publication number: WO 2025/126567

(57) **Abstract**

A tire includes: a tire frame member including a bead portion, a side portion continuous with a tire radial direction outer side of the bead portion, and a crown portion continuous with a tire width direction inner side of the side portion, the tire frame member being circular; a spiral belt disposed at a tire radial direction outer side of the crown portion, the spiral belt being formed by spirally winding, in a tire circumferential direction, a covered cord comprising one or a plurality of reinforcing cords covered with a resin or rubber; and an RF tag disposed in a second divided region located at an opposite side from a first divided region in a tire radial direction, the first divided region including a region in which one end portion and another end portion of the covered cord overlap with each other in the tire circumferential direction, and the first divided region and the second divided region being included among divided regions that are regions at the tire radial direction outer side of the crown portion and that divide the tire frame member into four in the tire circumferential direction.

## Description

### Technical Field

The present disclosure relates to a tire and a non-pneumatic tire.

### Background Art

A tire incorporating an RF tag including an RFID chip and an antenna (also referred to as "RF tag") is known (see, for example, Japanese Patent Application Laid-Open (JP-A) No. 2023-87600).

Japanese Patent Application Laid-Open (JP-A) No. 2016-179731 discloses a non-pneumatic tire. The non-pneumatic tire disclosed in JP-A No. 2016-179731 includes an attachment body attached to an axle, an outer tubular body configured to surround the attachment body from the outer side in a tire radial direction, a tread portion configured to surround the outer tubular body from the outer side in the tire radial direction, and a connecting member configured to connect the attachment body to the outer tubular body displaceably. To the outer circumferential surface of the outer tubular body of the non-pneumatic tire described in JP-A No. 2016-179731, a spiral reinforcing layer is adhered that is formed, on the outer circumferential surface of the outer tubular body, by spirally winding an element wire body in which one cord or a plurality of cords parallel to each other are embedded in a covering body.

### SUMMARY OF INVENTION

### Technical Problem

A tire is known in which a spiral belt obtained by spirally winding a resin-covered cord in a tire circumferential direction is disposed at the tire radial direction outer side of a crown portion of a tire frame member. In such a tire, a winding start portion and a winding end portion in the resin-covered cord overlap with each other in the tire circumferential direction, and thus a spiral belt is formed. However, in the spiral belt, the belt width is wider, that is, the number of resin-covered cords is larger, so that the weight is larger, in a region where the winding start portion and the winding end portion in the resin-covered cord overlap with each other in the tire circumferential direction than in the other region where the winding start portion and the winding end portion do not overlap with each other. In a case in which the spiral belt has a region where the weight is increased in the tire circumferential direction as described above, the uniformity of the tire may deteriorate.

The discloser of the disclosure has newly conceived providing a communication device (for example, an RF tag) in a non-pneumatic tire as described in JP-A No. 2016-179731, and has newly found a configuration capable of suppressing deterioration of the uniformity of the non-pneumatic tire caused by providing the communication device, and has completed the disclosure.

An object of one aspect of the disclosure is to suppress deterioration of uniformity in a tire in which a spiral belt and an RF tag are disposed at the tire radial direction outer side of a crown portion of a tire frame member. An object of another aspect of the disclosure is to suppress deterioration of uniformity caused by providing a communication device in a non-pneumatic tire.

### Solution to Problem

One aspect of the disclosure is
a tire, including:
a tire frame member including a bead portion, a side portion continuous with a tire radial direction outer side of the bead portion, and a crown portion continuous with a tire width direction inner side of the side portion, the tire frame member being circular;
a spiral belt disposed at a tire radial direction outer side of the crown portion, the spiral belt being formed by spirally winding, in a tire circumferential direction, a covered cord comprising one or a plurality of reinforcing cords covered with a resin or rubber; and
an RF tag disposed in a second divided region located at an opposite side from a first divided region in a tire radial direction, the first divided region including a region in which one end portion and another end portion of the covered cord overlap with each other in the tire circumferential direction, and the first divided region and the second divided region being included among divided regions that are regions at the tire radial direction outer side of the crown portion and that divide the tire frame member into four in the tire circumferential direction.

Another aspect of the disclosure is
a non-pneumatic tire, including:
a wheel member attachable to an axle;
a ring member fitted to the wheel member;
a spiral reinforcing layer formed by spirally winding an element wire body in which one or a plurality of cords parallel to each other are embedded in a covering body at an outer circumferential surface of the ring member;
a tread member surrounding an outer side, in a tire radial direction, of the spiral reinforcing layer; and
a communication device held by the ring member, wherein:
   the spiral reinforcing layer includes an overlap region in which one end portion and another end portion of the element wire body overlap with each other in a tire circumferential direction, and
   the communication device is held by the ring member so as to be included in a third quadrant that is not adjacent to a first quadrant in the tire circumferential direction, the first quadrant and the third quadrant being defined such that a region in the tire circumferential direction is divided into the first quadrant, a second quadrant, the third quadrant, and a fourth quadrant, each having a center angle with respect to a tire center axis of 90 degrees, and a central position of the overlap region in the tire circumferential direction coincides with a central position of the first quadrant in the tire circumferential direction.

### Advantageous Effects of Invention

According to one aspect of the disclosure, it is possible to suppress deterioration of uniformity in a tire in which a spiral belt and an RF tag are disposed at the tire radial direction outer side of a crown portion of a tire frame member. According to another aspect of the disclosure, it is possible to suppress deterioration of uniformity caused by providing a communication device in a non-pneumatic tire.

### BRIEF DESCRIPTION OF DRAWINGS

Fig. 1 is a sectional view showing one side of a section along a tire width direction of a tire according to a first embodiment of the disclosure.
Fig. 2 is a plan view illustrating a spiral belt and a crown portion to show a first circumferential direction region in the tire of Fig. 1.
Fig. 3 is a plan view illustrating the spiral belt and the crown portion to show a second circumferential direction region in the tire of Fig. 1.
Fig. 4 is a sectional view taken along the line 4X-4X in Fig. 3.
Fig. 5 is a side view of the spiral belt and the crown portion in the tire of Fig. 1 viewed in the tire width direction.
Fig. 6A is a plan view of an RF tag included in the tire of Fig. 1.
Fig. 6B is a side view of the RF tag of Fig. 6A.
Fig. 7 is an enlarged plan view of a spiral belt and a crown portion around an RF tag included in a tire according to another embodiment of the disclosure.
Fig. 8 is a sectional view showing one side of a section along a tire width direction of a tire according to another embodiment of the disclosure.
Fig. 9 is a plan view illustrating a spiral belt and a crown portion to show the surroundings of an RF tag included in the tire of Fig. 8.
Fig. 10 is a side view of a non-pneumatic tire as a second embodiment of the disclosure.
Fig. 11 is an enlarged view of a part of Fig. 10.
Fig. 12 is a sectional view taken along the line I-I in Fig. 11.
Fig. 13 is a diagram showing a communication device illustrated in Fig. 10 and a reader/writer capable of wirelessly communicating with the communication device.
Fig. 14 is a view showing an example of the communication device illustrated in Fig. 10.
Fig. 15 is a perspective view showing a state in which the communication device illustrated in Fig. 14 is covered with a covering member.
Fig. 16 is a view showing an overlap region of a spiral reinforcing layer.
Fig. 17 is a view showing a positional relationship between a communication device and an overlap region of a spiral reinforcing layer in a tire circumferential direction.
Fig. 18 is a view showing a modification of the positional relationship between the communication device and the overlap region of the spiral reinforcing layer in the tire circumferential direction shown in Fig. 17.
Fig. 19 is a view showing a modification of the arrangement of the communication device illustrated in Fig. 10.

### DESCRIPTION OF EMBODIMENTS

### (First Embodiment)

Hereinafter, a first embodiment for carrying out the technology of the disclosure will be described with reference to the drawings. Constituent elements denoted by the same reference signs in the drawings mean the same or similar constituent elements. Note that overlapping descriptions and overlapping reference signs may be omitted in the embodiments described below. All of the drawings used in the following description are schematic, and a dimensional relationship among elements, a ratio among elements, and the like illustrated in a drawing do not necessarily coincide with actual ones. Dimensional relationships among elements, ratios among elements, and the like in a plurality of drawings also do not necessarily coincide with each other.

In the drawings, an arrow TC indicates a tire circumferential direction, an arrow TW indicates a tire width direction, and an arrow TR indicates a tire radial direction. Hereinafter, a side close to a tire rotational axis along a tire radial direction is referred to as "tire radial direction inner side", and a side far from the tire rotational axis along the tire radial direction is referred to as "tire radial direction outer side". Meanwhile, a side close to a tire equatorial plane CL along a tire width direction is referred to as "tire width direction inner side", and a side far from the tire equatorial plane CL along the tire width direction is referred to as "tire width direction outer side".

The dimension of each part is measured by the method described in the 2023 version YEAR BOOK issued by The Japan Automobile Tyre Manufacturers Association, Inc. (JATMA).

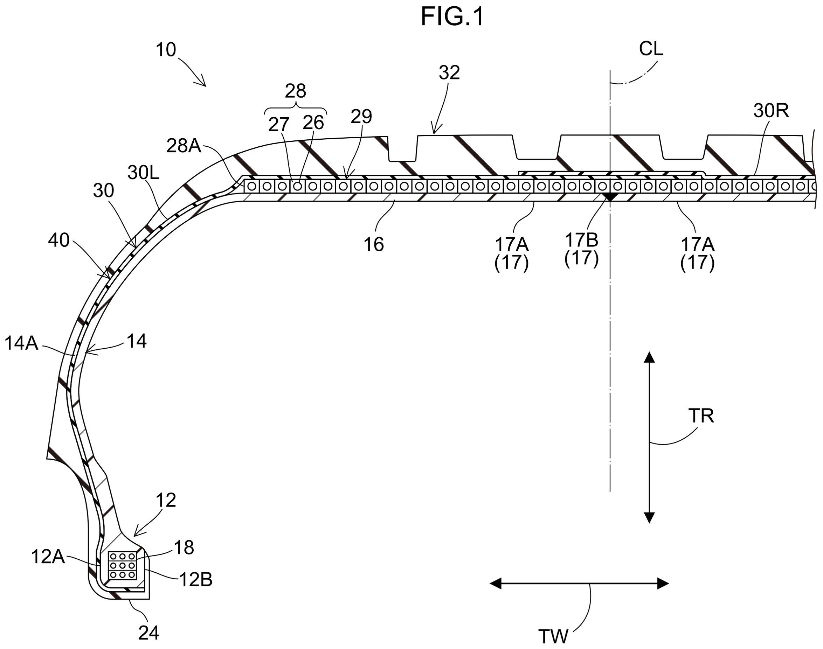

As shown in Fig. 1, a tire 10 of the present embodiment is a pneumatic tire used in a state of being filled with air, and has a sectional shape substantially similar to that of a conventional general pneumatic rubber tire (hereinafter, referred to as "rubber tire", if appropriate).

### (Tire Frame Member)

The tire 10 of the present embodiment includes a circular and resin-made tire frame member 17 that is a frame portion of the tire 10. The tire frame member 17 of the present embodiment is obtained by joining a pair of tire half parts 17A formed using a resin material with a bonding member 17B at a tire equatorial plane CL.

The tire frame member 17 includes a pair of bead portions 12 disposed at an interval in a tire width direction, a side portion 14 continuous with the tire radial direction outer side of one bead portion 12, and a crown portion 16 continuous with the tire width direction inner side of each side portion 14 and connecting tire radial direction outer side ends of the side portions 14. The circumferential direction, the width direction, and the radial direction of the tire frame member 17 correspond to the tire circumferential direction, the tire axial direction, and the tire radial direction, respectively.

The tire frame member 17 is formed from the resin material as a main raw material. The resin material does not contain vulcanized rubber. Examples of the resin material include thermoplastic resins (including thermoplastic elastomers), thermosetting resins, other general-purpose resins, and engineering plastics (including super engineering plastics).

The thermoplastic resins (including thermoplastic elastomers) refer to polymer compounds containing a material that softens and flows with an increase in temperature, and becomes relatively hard and strong when cooled. In the present description, among these, polymer compounds containing a material that softens and flows with an increase in temperature, becomes relatively hard and strong when cooled, and has rubber-like elasticity are referred to as thermoplastic elastomers, and polymer compounds containing a material that softens and flows with an increase in temperature, becomes relatively hard and strong when cooled, and does not have rubber-like elasticity are referred to as thermoplastic resins that are not elastomers, for distinction.

Examples of the thermoplastic resins (including thermoplastic elastomers) include polyolefin-based thermoplastic elastomers (TPOs), polystyrene-based thermoplastic elastomers (TPSs), polyamide-based thermoplastic elastomers (TPAs), polyurethane-based thermoplastic elastomers (TPUs), polyester-based thermoplastic elastomers (TPCs), dynamically crosslinked thermoplastic elastomers (TPVs), polyolefin-based thermoplastic resins, polystyrene-based thermoplastic resins, polyamide-based thermoplastic resins, and polyester-based thermoplastic resins.

As the thermoplastic material, for example, a material can be used that has a deflection temperature under load (under a load of 0.45 MPa) specified in ISO75-2 or ASTM D648 of 78°C or higher, a tensile yield strength specified in JIS K7113 of 10 MPa or more, a tensile fracture elongation specified in JIS K7113 of 50% or more, and a Vicat softening temperature (method A) specified in JIS K7206 of 130°C.

The thermosetting resins refer to polymer compounds that form a three-dimensional network structure with an increase in temperature and cure. Examples of the thermosetting resins include a phenol resin, an epoxy resin, a melamine resin, and a urea resin.

As the resin material, the thermoplastic resins (including thermoplastic elastomers) and the thermosetting resins described above may be used, and in addition, general-purpose resins may be used such as (meth)acrylic resins, EVA resins, vinyl chloride resins, fluorine-based resins, and silicone-based resins.

The tire frame member 17 may be formed using a single resin material, or portions (the bead portion 12, the side portion 14, the crown portion 16, and the like) of the tire frame member 17 may be formed using resin materials having different characteristics.

The bead portion 12 is a portion to be engaged with a standard rim via covering rubber 24, and a circular bead core 18 extending along the tire circumferential direction is embedded in the bead portion 12. The bead core 18 includes a bead cord (not illustrated) such as a metal cord (for example, a steel cord), an organic fiber cord, a resin-covered organic fiber cord, or a hard resin. The bead core 18 may be omitted as long as the rigidity of the bead portion 12 can be sufficiently ensured.

As shown in Fig. 1, the side portion 14 is a portion constituting a side portion of the tire 10, and is gently curved so as to protrude to the tire width direction outer side from the bead portion 12 toward the crown portion 16.

The crown portion 16 is a portion supporting a tread 32, which is described below, provided at the tire radial direction outer side, and an outer surface 16A is substantially flat along the tire width direction.

### (Spiral Belt)

A spiral belt 29 is provided at the tire radial direction outer side of the crown portion 16. The spiral belt 29 is formed by spirally winding a resin-covered cord 28 (an example of a covered cord in the disclosure) in which one reinforcing cord 26 or a plurality of reinforcing cords 26 are covered with a resin 27 in the tire circumferential direction. In the present embodiment, the spiral belt 29 includes the resin-covered cord 28 in which one reinforcing cord 26 is covered with the resin 27, but the disclosure is not limited to this configuration.

### (Reinforcing Layer)

The tire frame member 17 has an outer surface on which a reinforcing layer 30 is disposed. The reinforcing layer 30 extends from the tire radial direction inner side of the bead core 18 toward the tire radial direction outer side along the outer surface of the tire frame member 17, and further extends to the tire radial direction inner side of the bead core 18 on the opposite side beyond the tire equatorial plane CL.

The reinforcing layer 30 includes a plurality of reinforcing cords (not illustrated) covered with rubber (not illustrated). The reinforcing cords of the reinforcing layer 30 are organic fiber monofilaments (single wires) or multi filaments (stranded wires) obtained by twisting organic fibers, and each extend in the radial direction and are arranged parallel to each other in the tire circumferential direction. The reinforcing cords of the reinforcing layer 30 may be inclined at an angle of 10° or less with respect to the tire radial direction in a tire side view.

The reinforcing layer 30 of the present embodiment is formed by bonding a ply 30L and a ply 30R, which are described below, in which a plurality of reinforcing cords arranged parallel to each other are covered with rubber (unvulcanized), to the outer circumferential surface of the molded tire frame member 17. Specifically, at least an outer surface 14A of the side portion 14 is covered with the reinforcing layer 30.

Examples of the usable reinforcing cord of the reinforcing layer 30 include polyester cords, nylon cords, PET cords, and aromatic polyamide cords. A metal such as steel may be used as a material of the reinforcing cord of the reinforcing layer 30. The reinforcing layer 30 may be formed by covering the reinforcing cords with a resin instead of rubber.

### (Tread)

On the tire radial direction outer side of the reinforcing layer 30, the rubber tread 32 is disposed. The tread 32 covers the tire radial direction outer side portion of the reinforcing layer 30. The rubber material contained in the tread 32 is similar to tread rubber of a conventional general pneumatic tire or tread rubber for a retreaded tire. The tread 32 has a road surface contact surface on which a tread pattern (not illustrated) is formed.

### (Covering Rubber)

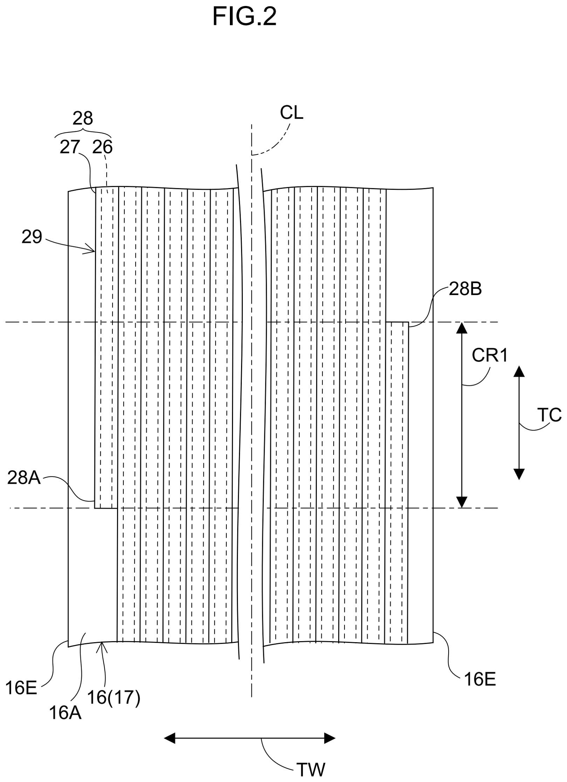

As shown in Figs. 1 and 2, on the outer surface of the reinforcing layer 30 attached to the tire frame member 17, covering rubber 24 is provided from the outer surface 14A on the tire outer side of the side portion 14 to an inner surface 12B on the tire inner side of the bead portion 12. Specifically, the covering rubber 24 is folded back from the outer surface 14A of the side portion 14 to the inner surface 12B side of the bead portion 12 via an outer surface 12A of the bead portion 12.

The outer side end portion on the tire radial direction outer side of the covering rubber 24 is joined (vulcanized and adhered) to the tread 32 and the tire frame member 17, in a state of being sandwiched between the reinforcing layer 30 attached to the tire frame member 17 and the outer side end portion of the tire width direction outer side of the tread 32. In the present embodiment, the entire outer surface of the reinforcing layer 30 attached to the tire frame member 17 is covered with the tread 32 and the covering rubber 24.

As the rubber material contained in the covering rubber 24, a rubber material is used that has higher weather resistance and a higher sealing property with a standard rim than the tire frame member 17. The rubber material contained in the covering rubber 24 is similar to a rubber material used in a sidewall and a bead portion of a conventional general pneumatic rubber tire.

### (RF Tag)

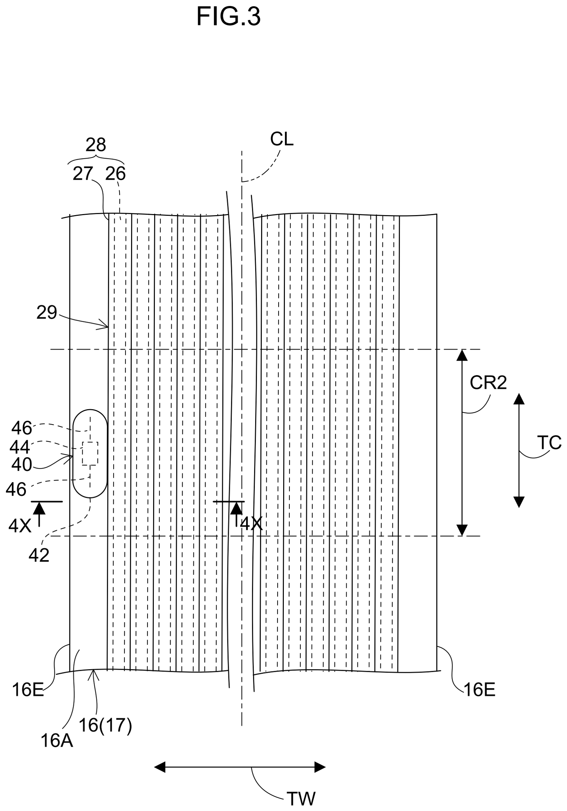

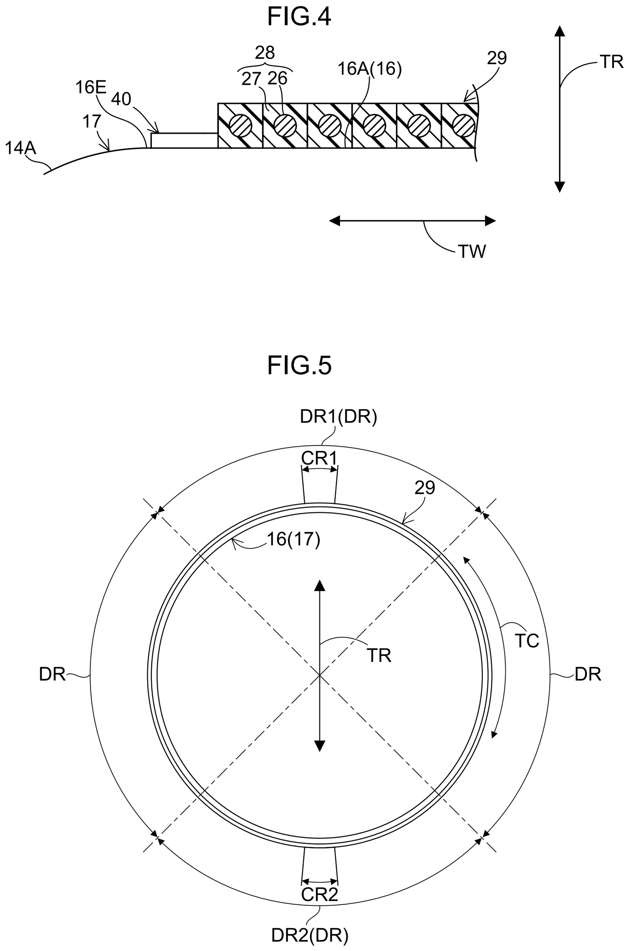

As shown in Figs. 3 and 4, the tire 10 includes an RF tag (also referred to as "RFID tag") 40. The RF tag 40 is configured to be capable of wirelessly communicating with a reader (not illustrated).

As shown in Fig. 4, the RF tag 40 is disposed at the tire radial direction outer side of the crown portion 16. Specifically, the RF tag 40 is attached to the outer surface 16A of the crown portion 16. In the present embodiment, for example, the RF tag 40 is welded to the outer surface 16A of the crown portion 16.

The RF tag 40 is disposed in a second divided region DR2 disposed at a side, in the tire radial direction, opposite from a first divided region DR1 including a region in which one end portion 28A and the other end portion 28B of the resin-covered cord 28 overlap with each other in the tire circumferential direction (a first circumferential direction region CR1 described below) in divided regions DR that divide the tire frame member 17 into four in the tire circumferential direction, as shown in Fig. 5. Specifically, at least a part of the RF tag 40 is disposed in a second circumferential direction region CR2 corresponding to the first circumferential direction region CR1 in which the one end portion 28A and the other end portion 28B of the resin-covered cord 28 overlap with each other in the tire circumferential direction as shown in Fig. 2, and located at an opposite side from the first circumferential direction region CR1 in the tire radial direction. More specifically, as shown in Fig. 5, the second circumferential direction region CR2 is located at an opposite side from the first circumferential direction region CR1 in the tire radial direction. The first circumferential direction region CR1 and the second circumferential direction region CR2 have the same circumferential length, and the first circumferential direction region CR1 corresponds to the second circumferential direction region CR2. In the present embodiment, as shown in Fig. 3, the RF tag 40 is entirely disposed in the second circumferential direction region CR2. The disclosure is not limited to this configuration, and a part of the RF tag 40 may be out of the second circumferential direction region CR2. In the present embodiment, for example, the center of the first circumferential direction region CR1 in the tire circumferential direction coincides with the center of the first divided region DR1 in the tire circumferential direction.

As shown in Figs. 3 and 4, the RF tag 40 is disposed at a side (the tire width direction outer side) of the spiral belt 29. Specifically, the RF tag 40 is disposed between an end portion 16E of the crown portion 16 in the tire width direction and a side surface of the spiral belt 29. The RF tag 40 is disposed along the side surface of the spiral belt 29. The RF tag 40 may be in contact with the side surface of the spiral belt 29 or may be apart from the side surface of the spiral belt 29. The RF tag 40 may be fixed to the side surface of the spiral belt 29 by an adhesive or welding.

In the present embodiment, the RFID 40 is disposed at the side of the spiral belt 29 in the left side of Fig. 3, but the disclosure is not limited to this configuration. The RFID 40 may also be disposed in the right side of Fig. 3.

In the present embodiment, in the tire 10, the end portion 16E of the crown portion 16 in the tire width direction is a boundary (inflection point) between the substantially flat outer surface 16A of the crown portion 16 and the curved outer surface 14A of the side portion 14, but the disclosure is not limited to this configuration, and an end portion of the crown portion in the tire width direction may be set according to a specification of the tire.

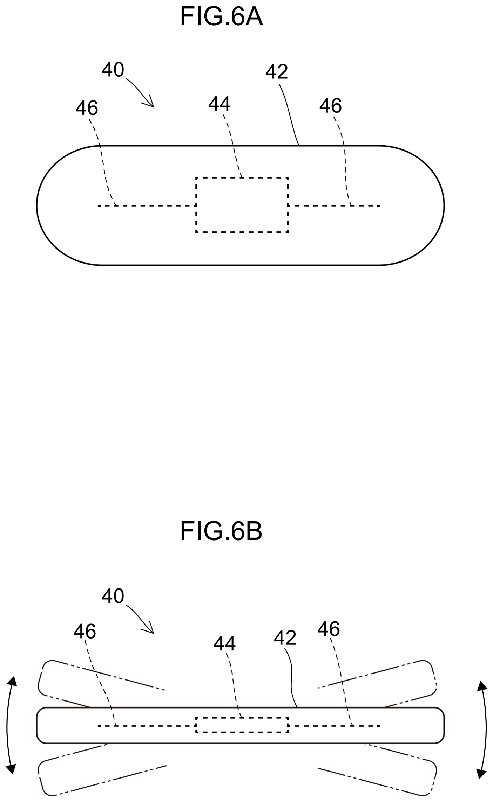

As shown in Figs. 6A and 6B, the RF tag 40 includes a resin case 42 having flexibility, and an RFID chip 44 and an antenna 46 housed in the case 42. In the present embodiment, a pair of antennas 46 extend in opposite directions from the RFID chip 44. Specifically, the pair of antennas 46 extend in opposite directions along a longitudinal side of the RF tag 40. In the present embodiment, the case 42 is formed from the same kind of resin material as the resin material forming the crown portion 16 of the tire frame member 17. As described above, the case 42 is welded to the outer surface 16A of the crown portion 16. The case 42 of the present embodiment has a plate shape and has a substantially quadrangular shape in which short sides are curved in an arc shape in a plan view, but the shape of the case 42 is not limited to this substantially quadrangular shape. For example, the case 42 may have a film shape.

Next, a functional effect of the present embodiment will be described.

In the tire 10 of the present embodiment, the RF tag 40 is disposed in the second divided region DR2 located at the side, in the tire radial direction, opposite from the first divided region DR1 including the first circumferential direction region CR1 in which the one end portion 28A and the other end portion 28B of the resin-covered cord 28 overlap with each other in the tire circumferential direction in the divided regions DR that divide the tire frame member 17 into four in the tire circumferential direction. In a case in which the RF tag 40 is disposed in this manner, the weight of the second divided region DR2 is increased to reduce the weight difference between the first divided region DR1 including the first circumferential direction region CR1, which is heavier than another region in the spiral belt 29, and the second divided region DR2. Thus, in the tire 10, the weight difference between the first divided region DR1 and the second divided region DR2 is smaller than in a case in which, for example, the RF tag 40 is disposed in the first divided region DR1, and thus deterioration of uniformity is suppressed.

In particular in the tire 10 of the present embodiment, at least a part of the RF tag 40 is disposed in the second circumferential direction region CR2 in a plan view of the spiral belt 29 shown in Fig. 3. In a case in which the RF tag 40 is disposed in this manner, the weight of the second circumferential direction region CR2 is increased to reduce the weight difference between the first circumferential direction region CR1, which is heavier than another region in the spiral belt 29, and the second circumferential direction region CR2. Thus, in the tire 10, the weight difference between the first circumferential direction region CR1 and the second circumferential direction region CR2 is smaller than in a case in which, for example, at least a part of the RF tag 40 is disposed in the first divided region DR1 including the first circumferential direction region CR1, and thus deterioration of uniformity is suppressed.

In the tire 10 of the present embodiment, the RF tag 40 is entirely disposed in the second circumferential direction region CR2, and therefore the weight difference between the first circumferential direction region CR1 and the second circumferential direction region CR2 can be further reduced.

In the tire 10 of the present embodiment, the RF tag 40 is disposed at the side of the spiral belt 29, and therefore the RF tag 40 is less covered with the spiral belt 29 than in a case in which, for example, the RF tag 40 is disposed between the spiral belt 29 and the crown portion 16, so that deterioration of the reception sensitivity of the RF tag 40 is suppressed.

In the tire 10 of the present embodiment, the reinforcing cord 26 is covered with the resin 27, and thus the tire weight can be reduced. The tire frame member 17 is formed from a resin material, and thus the tire weight can be further reduced. Furthermore, the recycling properties of the spiral belt 29 and the tire frame member 17 are improved.

In the tire 10 of the present embodiment, the case 42 housing the RFID chip 44 and the antenna 46 is welded to the crown portion 16 of the tire frame member 17, and thus the RF tag 40 can be easily and firmly attached to the tire frame member 17.

Furthermore, in the tire 10 of the present embodiment, the resin material forming the case 42 of the RF tag 40 is the same kind as the resin material forming the tire frame member 17, and thus the case 42 can be more firmly attached to the crown portion 16 than in a configuration in which, for example, the case 42 and the tire frame member 17 are formed using different kinds of resin materials.

### [Other Embodiments]

Although an example of the embodiment of the disclosure is described above, the embodiment of the disclosure is not limited to the above, and it is a matter of course that various modifications can be made in addition to the above without departing from the gist of the disclosure.

In the tire 10 of the above-described embodiment, the RF tag 40 is welded to the outer surface 16A of the crown portion 16, but the disclosure is not limited to this configuration, and a configuration may be adopted in which a part or the whole of the RF tag 40 is housed in a recess (not illustrated) formed in the outer surface 16A of the crown portion 16. As a result of housing the RF tag 40 in the recess as described above, the amount of protrusion of the RF tag 40 from the outer surface 16A of the crown portion 16 toward the tire radial direction outer side is reduced, and even in a case in which a crack or the like occurs in the tread 32, the influence of the crack is less likely to reach the RF tag 40.

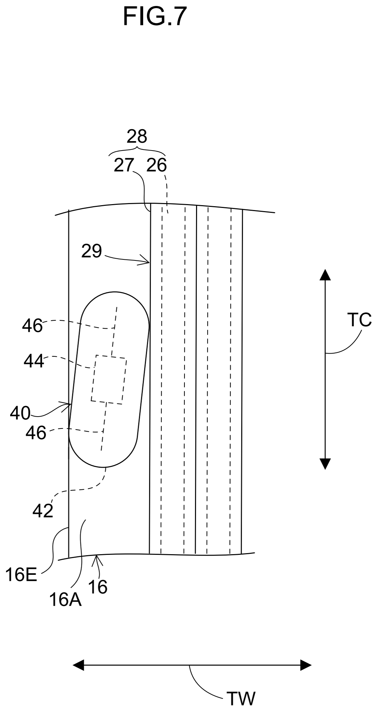

In the tire 10 of the above-described embodiment, the RF tag 40 is disposed along the side surface of the spiral belt 29, but the disclosure is not limited to this configuration. For example, as shown in Fig. 7, the RF tag 40 may be disposed obliquely with respect to the side surface of the spiral belt 29. Specifically, the RF tag 40 is disposed so that a longitudinal side of the RF tag 40 is inclined with respect to the side surface of the spiral belt 29 in a plan view. Even in this case, a functional effect similar to that of the above-described tire 10 can be exhibited.

In the above-described embodiment, the RF tag 40 is welded to the outer surface 16A of the crown portion 16, but the disclosure is not limited to this configuration, and the RF tag 40 may be adhered to the outer surface 16A of the crown portion 16 using an adhesive.

In the above-described embodiment, the resin material forming the case 42 and the resin material forming the crown portion 16 of the tire frame member 17 are the same kind of resin material, but the disclosure is not limited to this configuration, and the resin material forming the case 42 and the resin material forming the crown portion 16 of the tire frame member 17 may be different kinds of resin materials.

In the above-described embodiment, the configuration is adopted in which the reinforcing layer 30 includes a plurality of reinforcing cords (not illustrated) covered with rubber (not illustrated), but the disclosure is not limited to this configuration. A configuration may be adopted in which the reinforcing layer 30 includes a plurality of reinforcing cords (not illustrated) covered with a resin material (not illustrated).

At the time of manufacturing the tire 10, the RF tag 40 may be attached to the outer surface 16A of the crown portion 16 after formation of the spiral belt 29 on the tire frame member 17, or may be attached to the outer surface 16A of the crown portion 16 before formation of the spiral belt 29.

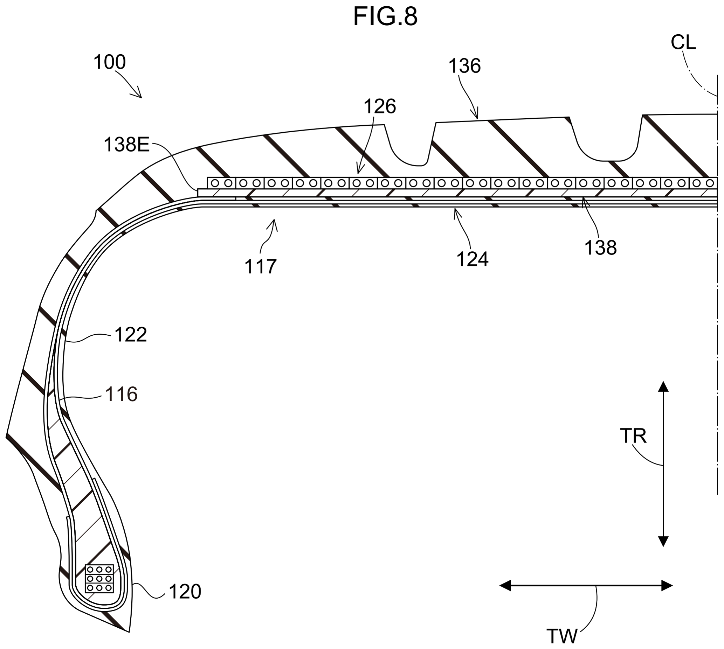

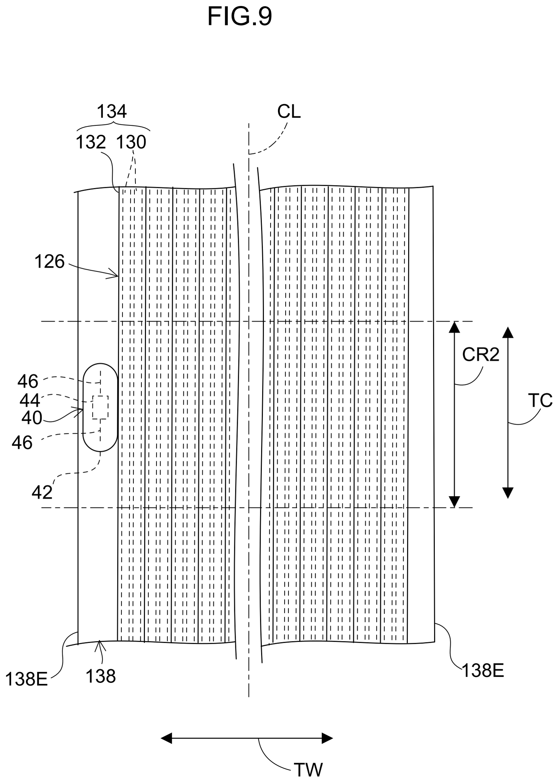

In the above-described embodiment, the tire frame member 17 contains a resin material, but the disclosure is not limited to this configuration. For example, as in a tire 100 shown in Figs. 8 and 9, the tire frame member may be formed using a material containing vulcanized rubber. Specifically, the tire 100 is, for example, a so-called radial tire to be used in a passenger car, and includes a tire frame member 117, a spiral belt 126, and the RF tag 40. Fig. 8 shows a shape of the tire 100 in a natural state before being filled with air. The tire frame member 117 includes a bead portion 120, a side portion 122, and a crown portion 124. Furthermore, the tire frame member 117 includes a carcass 116 including vulcanized rubber and a reinforcing cord, and a circular base ring 138 formed using a resin material. The crown portion 124 of the tire frame member 117 includes a central portion of the carcass 116 and the base ring 138 disposed at the circumference of the central portion. In the tire 100, an end portion 138E on the tire width direction outer side of the base ring 138 corresponds to the end portion on the tire width direction outer side of the crown portion 124, and the outer surface of the base ring 138 corresponds to the outer surface of the crown portion 124. As the resin material contained in the base ring 138, the same kind of resin material as a resin 132 contained in the spiral belt 126 may be used. The spiral belt 126 is attached (welded, for example) to the outer surface of the base ring 138. As shown in Fig. 8, the spiral belt 126 is formed by winding a resin-covered cord 134 (an example of a covered cord in the disclosure) in which a plurality of (for example, two) reinforcing cords 130 are covered with the resin 132 in the tire circumferential direction. The material contained in the spiral belt 126 may be the same as the material contained in the spiral belt 29. As shown in Fig. 9, the RF tag 40 is disposed in a second divided region located at a side, in the tire radial direction, opposite from a first divided region including a region in which one end portion (not illustrated) and the other end portion (not illustrated) of the resin-covered cord 134 overlap with each other in the tire circumferential direction (a first circumferential direction region described below (not illustrated)) in divided regions (not illustrated) that divide the tire frame member 117 into four in the tire circumferential direction. Specifically, at least a part of the RF tag 40 is disposed in a second circumferential direction region corresponding to the first circumferential direction region in which the one end portion and the other end portion of the resin-covered cord 134 overlap with each other in the tire circumferential direction, and located at an opposite side from the first circumferential direction region in the tire radial direction. The RF tag 40 is attached to the base ring 138 included in the crown portion 124. On the tire radial direction outer side of the spiral belt 126, a tread 136 containing a rubber material is disposed. In the tire 100, the tire frame member 117 is formed from a material containing vulcanized rubber, but a functional effect can be obtained that is similar to that of the tire 10 of the above-described embodiment in which the tire frame member 17 is formed of a resin material.

In the tire 10 of the above-described embodiment, the spiral belt 29 is formed by spirally winding the resin-covered cord 28 in which one reinforcing cord 26 or a plurality of reinforcing cords 26 are covered with the resin 27 in the tire circumferential direction, but the disclosure is not limited to this configuration. For example, a spiral belt (not illustrated) may be formed by spirally winding a rubber-covered cord (not illustrated) in which one reinforcing cord 26 or a plurality of reinforcing cords 26 are covered with rubber in the tire circumferential direction. Even in this case, a functional effect similar to that of the above-described tire 10 can be obtained. The configuration using a rubber-covered cord instead of a resin-covered cord may be applied to the above-described tire 100.

### (Second Embodiment)

Hereinafter, a second embodiment of the non-pneumatic tire according to the disclosure will be illustratively described with reference to the drawings. In the drawings, the same components are denoted by the same reference signs. Hereinafter, the direction parallel to a tire center axis O of the non-pneumatic tire is referred to as "tire width direction A". Hereinafter, a direction around the tire center axis O of the non-pneumatic tire is referred to as "tire circumferential direction B". Hereinafter, in a section orthogonal to the tire center axis O of the non-pneumatic tire, a radial direction of a virtual circle having a center on the tire center axis O is referred to as "tire radial direction C".

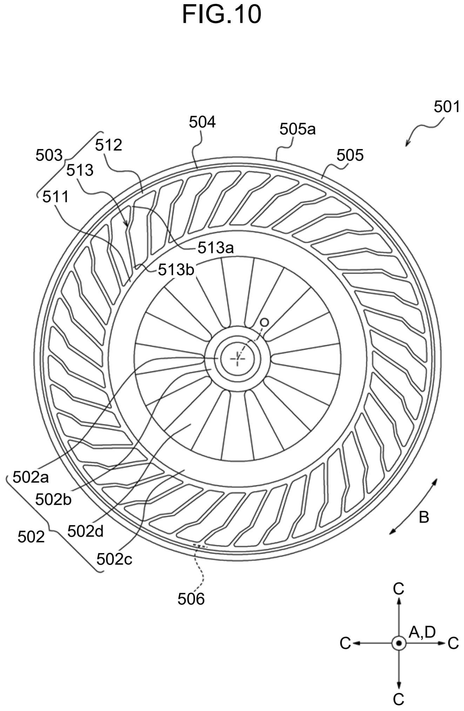

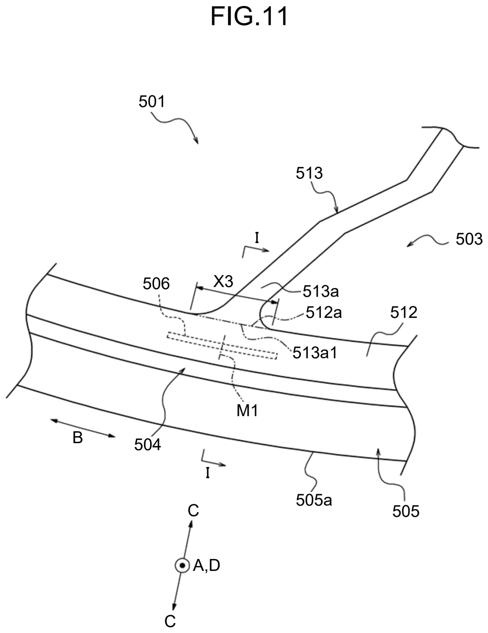

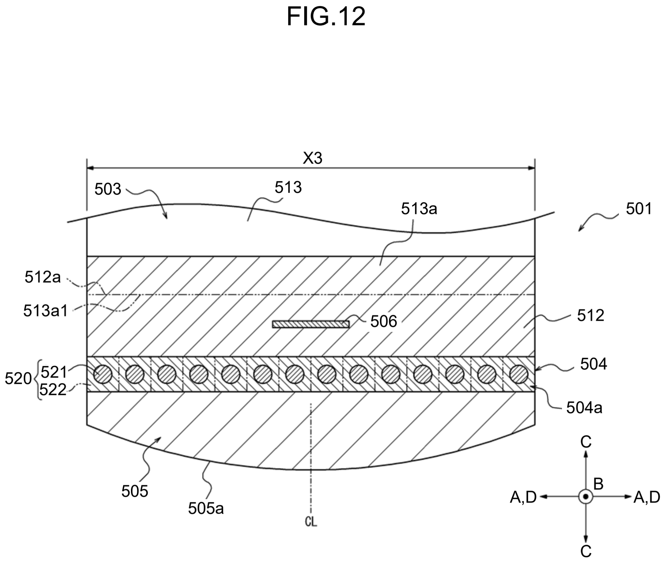

Fig. 10 is a side view of a non-pneumatic tire 501 as one embodiment of the non-pneumatic tire according to the disclosure. Fig. 11 is an enlarged view of a part of Fig. 10. Fig. 12 is a sectional view taken along the line I-I in Fig. 11.

As shown in Fig. 10, the non-pneumatic tire 501 of the present embodiment includes a wheel member 502, a ring member 503, a spiral reinforcing layer 504, a tread member 505, and a communication device 506. The non-pneumatic tire 501 is used in a state of being fitted to an axle of various vehicles such as a bicycle, a two-wheeled vehicle, and an automobile.

As shown in Fig. 10, the wheel member 502 is formed into a disk shape. Each of the ring member 503, the spiral reinforcing layer 504, and the tread member 505 is formed into a circular shape. The center axis of the wheel member 502, the center axis of the ring member 503, the center axis of the spiral reinforcing layer 504, and the center axis of the tread member 505 are located at a common axis. In the present embodiment, the common axis is the tire center axis O.

In the present embodiment, the central positions of the wheel member 502, the ring member 503, the spiral reinforcing layer 504, and the tread member 505 in the tire width direction A substantially coincide with each other. The wheel member 502, the ring member 503, the spiral reinforcing layer 504, and the tread member 505 of the present embodiment as a whole have a symmetrical structure in the tire width direction A with respect to the tire equatorial plane CL (see Fig. 12) passing through the central position in the tire width direction A, but are not limited to this configuration.

The wheel member 502 is configured to be attachable to an axle. Specifically, the wheel member 502 of the present embodiment includes a tubular boss 502a extending in the tire width direction A and to which an axle is fitted, a fitting tubular portion 502b fixed to the outer circumferential surface of the boss 502a, a support tubular portion 502c surrounding the outer side of the fitting tubular portion 502b in the tire radial direction C and supporting the ring member 503 on the outer circumferential surface, and a plurality of spokes 502d connecting the fitting tubular portion 502b and the support tubular portion 502c.

Each of the boss 502a, the fitting tubular portion 502b, and the support tubular portion 502c is disposed so that the center axis is located at the tire center axis O. The plurality of spokes 502d are disposed, for example, at equal intervals in the tire circumferential direction B. Each of the plurality of spokes 502d radially extends in the tire radial direction C about the boss 502a.

For example, the boss 502a, the fitting tubular portion 502b, the support tubular portion 502c, and the plurality of spokes 502d may be made of a metal such as an aluminum alloy. The boss 502a, the fitting tubular portion 502b, the support tubular portion 502c, and the plurality of spokes 502d may be made of a resin such as a thermoplastic resin. Alternatively, some of the boss 502a, the fitting tubular portion 502b, the support tubular portion 502c, and the plurality of spokes 502d may be made of a metal, and the others may be made of a resin. As described above, the material of each constituent element of the wheel member 502 is not particularly limited.

The ring member 503 is fitted to the wheel member 502. More specifically, the ring member 503 of the present embodiment is externally fitted to the support tubular portion 502c of the wheel member 502 and supported on the outer circumferential surface of the support tubular portion 502c.

The ring member 503 includes an inner tubular body 511, an outer tubular body 512, and a connecting member 513.

The inner tubular body 511 is fixed to the wheel member 502. Specifically, the inner tubular body 511 of the present embodiment is externally fitted to the support tubular portion 502c of the wheel member 502 and supported by the outer circumferential surface of the support tubular portion 502c in the entire region in the tire circumferential direction B. In this state, the inner tubular body 511 of the present embodiment is joined to the support tubular portion 502c with a fastening member such as a bolt, and thus fixed to the support tubular portion 502c. The inner tubular body 511 is attached to an axle via the wheel member 502.

The outer tubular body 512 surrounds the outer side of the inner tubular body 511 in the tire radial direction C. The center axis of the inner tubular body 511 and the center axis of the outer tubular body 512 are located at the tire center axis O. The inner tubular body 511 and the outer tubular body 512 of the present embodiment are disposed in a state in which the central portions in the tire width direction A coincide with each other.

The connecting member 513 connects the inner tubular body 511 and the outer tubular body 512. The connecting member 513 is configured to be elastically deformable between the inner tubular body 511 and the outer tubular body 512. More specifically, the connecting member 513 is configured to be elastically deformable in the tire radial direction C between the inner tubular body 511 and the outer tubular body 512.

As shown in Fig. 10, a plurality of the connecting members 513 of the present embodiment are disposed in the tire circumferential direction B. More specifically, the plurality of the connecting members 513 of the present embodiment are disposed in the tire circumferential direction B at positions between the inner tubular body 511 and the outer tubular body 512 in the tire radial direction C. The plurality of the connecting members 513 are disposed apart from each other in the tire circumferential direction B. That is, two connecting members 513 adjacent to each other in the tire circumferential direction B are not in contact with each other, and are disposed apart from each other in the tire circumferential direction B. The plurality of the connecting members 513 of the present embodiment are disposed so as to be point-symmetrical with each other with respect to the tire center axis O.

Each connecting member 513 of the present embodiment is a plate-shaped portion disposed so that the thickness direction of the connecting member 513 is an in-plane direction of a plane orthogonal to the tire center axis O. In the connecting member 513 of the present embodiment, an outer end portion 513a on the outer side in the tire radial direction C connected to the outer tubular body 512 and an inner end portion 513b on the inner side in the tire radial direction C connected to the inner tubular body 511 are disposed at different positions in the tire circumferential direction B. Thus, the plate-shaped portion as the connecting member 513 can be used as a plate spring that easily elastically deforms in the tire radial direction C. However, the configuration of the connecting member 513 is not limited to the configuration of the present embodiment.

The constituent materials of the inner tubular body 511, the outer tubular body 512, and the connecting member 513 are not particularly limited. The inner tubular body 511, the outer tubular body 512, and the connecting member 513 of the present embodiment are made of a resin. The inner tubular body 511, the outer tubular body 512, and the connecting member 513 are preferably made of a resin from the viewpoint of weight reduction. Examples of a resin material that can be used as a constituent material of the inner tubular body 511, the outer tubular body 512, and the connecting member 513 include thermoplastic resins such as polyesters and nylons, thermosetting resins such as vinyl ester resins and unsaturated polyester resins, and other synthetic resins. The resin material may further contain fibers of glass, carbon, graphite, aramid, polyethylene, a ceramic, or the like as reinforcing fibers. Note that the communication device 506 of the present embodiment is embedded in the outer tubular body 512 as described below. In such a case, the inner tubular body 511 and the connecting member 513 in which the communication device 506 is not embedded may be made of a metal, but as described above, from the viewpoint of weight reduction, the inner tubular body 511 and the connecting member 513 are also preferably made of a resin.

In the present embodiment, the inner tubular body 511, the outer tubular body 512, and the connecting member 513 are integrally formed by injection molding using a resin material. The injection molding may be a method of integrally molding the whole of the inner tubular body 511, the outer tubular body 512, and the connecting member 513 at the same time. The resin material may be, for example, only one kind of resin material, a mixture containing two or more kinds of resin materials, or a mixture containing one or more kinds of resin materials and one or more kinds of elastomers. The resin material may further contain, for example, an additive such as an antiaging agent, a plasticizer, a filler, or a pigment. The resin material is preferably a thermoplastic resin. Note that the inner tubular body 511, the outer tubular body 512, and the connecting member 513 may be formed separately and assembled.

The wheel member 502 has a function of connecting an axle and the ring member 503, and the ring member 503 has a function of absorbing vibration transmitted from the ground to the axle. As described above, the wheel member 502 and the ring member 503 have different functions, and therefore they may be formed using different materials. For example, the ring member 503 may be formed using a material having a relatively small elastic modulus in order to ensure vibration absorption performance, and the wheel member 502 may be formed using a material having a larger elastic modulus than the ring member 503 in order to ensure robustness.

The ring member 503 of the present embodiment includes the inner tubular body 511, the outer tubular body 512, and the connecting member 513 described above, but is not limited to this configuration. The ring member 503 may further include another portion in addition to the inner tubular body 511, the outer tubular body 512, and the connecting member 513.

The spiral reinforcing layer 504 is formed by spirally winding an element wire body 520 in which one cord 521 or a plurality of cords 521 parallel to each other are embedded in a covering body 522 on the outer circumferential surface of the ring member 503. Fig. 12 shows the element wire body 520, as an example, in which only one cord 521 is embedded in the covering body 522.

The element wire body 520 is spirally wound on the outer circumferential surface of the outer tubular body 512, that is, the outer circumferential surface of the ring member 503, and thus the element wire body 520 is adjacent to itself in the tire width direction A on the outer circumferential surface of the outer tubular body 512. In the element wire body 520, portions of the covering body 522 adjacent to each other in the tire width direction A are integrally fixed in the tire width direction A, and thus the spiral reinforcing layer 504 is formed on the outer circumferential surface of the outer tubular body 512. For convenience of description, two-dot chain lines in Fig. 12 indicate boundaries between portions in the covering body 522 before the covering body 522 is fixed. In other words, the spiral reinforcing layer 504 includes a base layer 504a formed by fixing portions of the covering body 522 adjacent to each other in the tire width direction A, and one or more cords 521 spirally extending in the base layer 504a. The constituent material of the covering body 522 may be, for example, a resin material. The covering body 522 may be formed, for example, using a rubber composition. Examples of the cord 521 include a steel cord.

The spiral reinforcing layer 504 may be adhered to the outer circumferential surface of the outer tubular body 512 of the ring member 503 over the entire region in the tire circumferential direction B. The adhesion between the spiral reinforcing layer 504 and the outer tubular body 512 may be performed, for example, by welding the element wire body 520 forming the spiral reinforcing layer 504 to the outer circumferential surface of the outer tubular body 512. In a case in which the covering body 522 is formed from a rubber composition, the adhesion between the spiral reinforcing layer 504 and the outer tubular body 512 may be performed by vulcanized adhesion.

In the non-pneumatic tire 501 of the present embodiment, the spiral reinforcing layer 504 is provided, and thus the rigidity of the outer tubular body 512 of the ring member 503 can be enhanced. Thus, for example, even in the case of use in an environment in which the non-pneumatic tire 501 receives a large input from a road surface or a protrusion on a road surface sticks into the tread member 505 of the non-pneumatic tire 501, the durability of the non-pneumatic tire 501 can be improved.

The tread member 505 surrounds the outer side of the spiral reinforcing layer 504 in the tire radial direction C. More specifically, the tread member 505 is formed into a tubular shape, and covers the entire outer circumferential surface on the outer side of the outer tubular body 512 of the ring member 503 in the tire radial direction C from the outer side of the spiral reinforcing layer 504 in the tire radial direction C. The constituent material of the tread member 505 has a smaller elastic modulus than the constituent material of the ring member 503. The outer circumferential surface on the outer side of the tread member 505 in the tire radial direction C is a tread surface 505a of the non-pneumatic tire 501. As shown in Fig. 12, the tread surface 505a of the tread member 505 may be a curved surface in which the central side in the tire width direction A protrudes outward in the tire radial direction C compared with both end sides.

The tread member 505 is formed, for example, using vulcanized rubber obtained by vulcanizing a rubber composition containing natural rubber and the like, or using a thermoplastic material. Examples of the thermoplastic material include thermoplastic elastomers and thermoplastic resins. Examples of the thermoplastic elastomers include amide-based thermoplastic elastomers (TPAs), ester-based thermoplastic elastomers (TPCs), olefin-based thermoplastic elastomers (TPOs), styrene-based thermoplastic elastomers (TPSs), urethane-based thermoplastic elastomers (TPUs), thermoplastic rubber crosslinked bodies (TPVs), and other thermoplastic elastomers (TPZs) specified in JIS K 6418. Examples of the thermoplastic resins include urethane resins, olefin resins, vinyl chloride resins, and polyamide resins. The tread member 505 is preferably formed using vulcanized rubber from the viewpoint of abrasion resistance.

As shown in Figs. 10 to 12, the communication device 506 of the present embodiment is held by the ring member 503. Specifically, the communication device 506 of the present embodiment is held by the outer tubular body 512 of the ring member 503. More specifically, the communication device 506 of the present embodiment is embedded in the outer tubular body 512 of the ring member 503. For example, the communication device 506 may be fixed to the inner circumferential surface of the outer tubular body 512 and thus held by the outer tubular body 512. However, as in the present embodiment, the communication device 506 is preferably embedded in the outer tubular body 512 of the ring member 503. In a case in which the communication device 506 is embedded in the outer tubular body 512, the circumference of the communication device 506 is protected by the outer tubular body 512, and damage to the communication device 506 at the time of vehicle traveling can be suppressed.

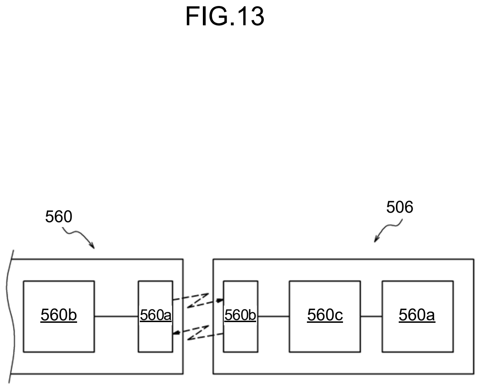

Fig. 13 is a diagram showing an RF tag as the communication device 506 of the present embodiment and a reader/writer 560 capable of wirelessly communicating with the RF tag. As shown in Fig. 13, the communication device 506 of the present embodiment may be a passive RF tag including a storage unit 506a that stores information regarding the non-pneumatic tire 501, an antenna unit 506b that can transmit and receive information to and from the reader/writer 560 located outer side the non-pneumatic tire 501, and a control unit 506c that can write information to the storage unit 506a and read information from the storage unit 506a. Specifically, in the RF tag as the communication device 506 of the present embodiment, the antenna unit 506b can receive information transmitted on a radio wave or a magnetic field from an antenna unit 560a of the reader/writer 560. Electric power is generated in the antenna unit 506b by rectification (in the case of a radio wave) or resonance (in the case of a magnetic field), and the storage unit 506a and the control unit 506c perform predetermined operations. For example, the control unit 506c reads information from the storage unit 506a, and returns (transmits) the information on a radio wave or a magnetic field from the antenna unit 506b to the reader/writer 560. The antenna unit 560a of the reader/writer 560 receives a radio wave or a magnetic field from the RF tag as the communication device 506 of the present embodiment. A control unit 560b of the reader/writer 560 extracts the received information, and thus can acquire the information stored in the storage unit 506a. The storage unit 506a and the control unit 506c described above can include, for example, an integrated circuit (IC chip) including a nonvolatile memory.

The information stored in the storage unit 506a of the RF tag as the communication device 506 of the present embodiment is not particularly limited. The storage unit 506a may be, for example, identification information that is unique to the non-pneumatic tire 501 and can specify each non-pneumatic tire, such as information of a manufacturer, a manufacturing factory, and a manufacturing date of the non-pneumatic tire 501. The storage unit 506a may store tire history information such as the travel distance of the non-pneumatic tire 501, the number of times of sudden braking, the number of times of sudden starting, and the number of times of sudden turning, as information that can be rewritten by the reader/writer 560. For example, a sensor that detects tire acceleration or the like may be attached to the non-pneumatic tire 501, and the storage unit 506a may store detection information detected by the sensor. The RF tag as the communication device 506 wirelessly communicates with the sensor through the antenna unit 506b, and thus can acquire the information detected by the sensor.

The communication device 506 only needs to be configured to be capable of wirelessly communicating with a predetermined device outer side the non-pneumatic tire 501, and is not limited to the RF tag of the present embodiment.

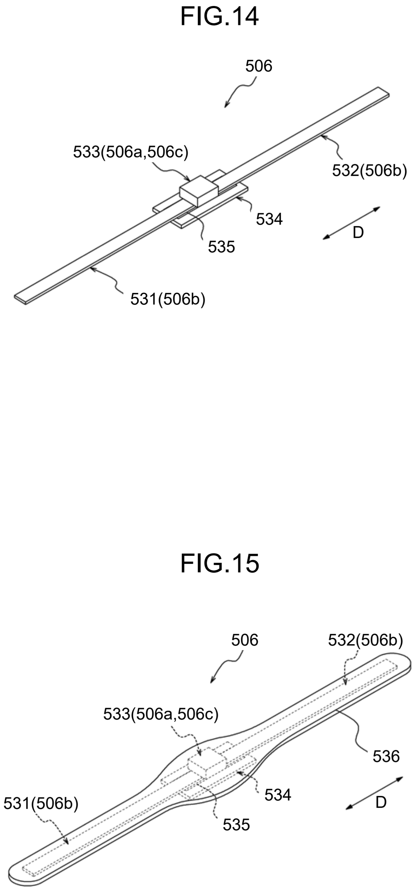

Figs. 14 and 15 are perspective views showing an RF tag as the communication device 506 of the present embodiment. As shown in Fig. 14, the RF tag as the communication device 506 of the present embodiment includes a first antenna 531 and a second antenna 532 included in the antenna unit 506b, an IC chip 533 included in the control unit 506c and the storage unit 506a and operated by an induced electromotive force generated by a radio wave received by the first antenna 531 and the second antenna 532, a plate-shaped support member 534 to which the IC chip 533 is attached, and a conductive conduction member 535 electrically connecting the IC chip 533 to each of the first antenna 531 and the second antenna 532. As shown in Fig. 14, the RF tag as the communication device 506 of the present embodiment includes the first antenna 531 and the second antenna 532 that are elongated and protrude from the IC chip 533 in directions opposite to each other to interpose the IC chip 533. As described above, the communication device 506 of the present embodiment has an elongated shape in which a longitudinal side D of the first antenna 531 and the second antenna 532 corresponds to a longitudinal side of the entire communication device 506. Fig. 15 is a perspective view showing a state in which the RF tag as the communication device 506 illustrated in Fig. 14 is covered with a covering member 536. The covering member 536 is formed from a resin. In the present embodiment, as shown in Fig. 15, the RF tag as the communication device 506 having the circumference covered with the covering member 536 is embedded in the outer tubular body 512.

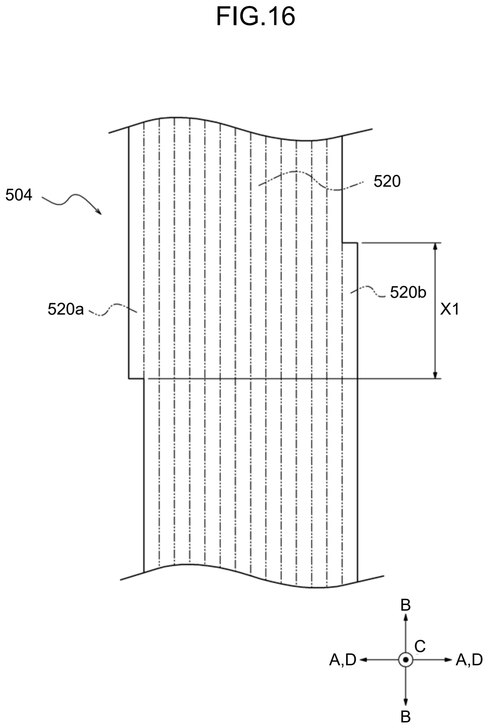

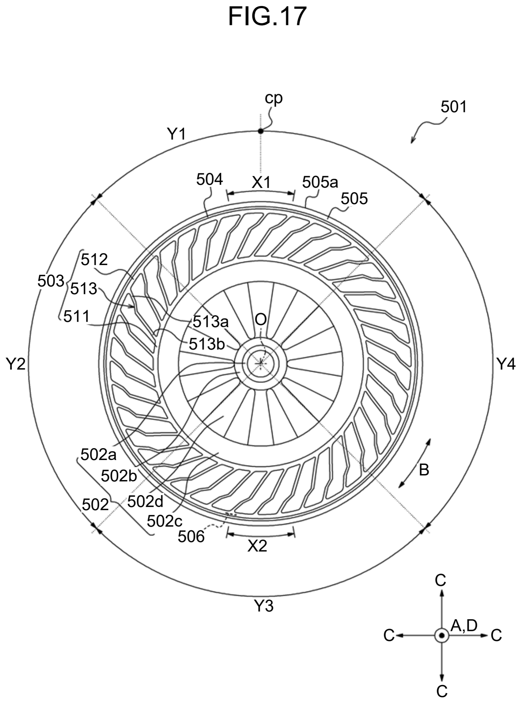

Next, the position in the tire circumferential direction B at which the communication device 506 is held by the ring member 503 will be described with reference to Figs. 16 and 17. Fig. 16 is a view showing an overlap region X1 of the spiral reinforcing layer 504. Fig. 16 is a view of the overlap region X1 of the spiral reinforcing layer 504 as viewed from the outer side in the tire radial direction C. Fig. 17 is a view showing a positional relationship between the communication device 506 and the overlap region X1 of the spiral reinforcing layer 504 in the tire circumferential direction B.

First, the overlap region X1 of the spiral reinforcing layer 504 shown in Fig. 16 will be described. As described above, the spiral reinforcing layer 504 is formed by spirally winding the element wire body 520 on the outer circumferential surface of the ring member 503 (the outer circumferential surface of the outer tubular body 512, in the present embodiment) (see Fig. 12). At this time, the element wire body 520 is wound on the outer circumferential surface of the ring member 503 so that one end portion 520a and the other end portion 520b of the element wire body 520 overlap with each other in the tire circumferential direction B. The overlap region X1 of the spiral reinforcing layer 504 is a region in which the one end portion 520a and the other end portion 520b of the element wire body 520 overlap with each other in the tire circumferential direction B. The number of portions of the element wire body 520 parallel to each other in the tire width direction A is larger in the overlap region X1 than in the region other than the overlap region X1 in the tire circumferential direction B.

As shown in Fig. 17, it is defined that the region in the tire circumferential direction B is divided into a first quadrant Y1, a second quadrant Y2, a third quadrant Y3, and a fourth quadrant Y4 each having a center angle with respect to the tire center axis O of 90 degrees and a central position CP of the overlap region X1 in the tire circumferential direction B coincides with a central position of the first quadrant Y1 in the tire circumferential direction B. In this case, as shown in Fig. 17, the communication device 506 is held by the ring member 503 so as to be included in the third quadrant Y3 that is not adjacent to the first quadrant Y1 in the tire circumferential direction B. That is, the communication device 506 is held by the ring member 503 so that at least a part of the communication device 506 is included in the third quadrant Y3. Thus, the communication device 506 is disposed in the third quadrant Y3 facing, in the tire radial direction C, to the first quadrant Y1 in which the overlap region X1 of the spiral reinforcing layer 504 is located. Thus, even in a case in which the communication device 506 is disposed only in a part in the tire circumferential direction B, the communication device 506 can balance with the overlap region X1 of the spiral reinforcing layer 504, so that deterioration of the uniformity of the non-pneumatic tire 501 can be suppressed.

As shown in Fig. 17, the communication device 506 of the present embodiment is held by the ring member 503 so as to be entirely included in the third quadrant Y3. More specifically, the communication device 506 of the present embodiment is embedded in the outer tubular body 512 so as to be entirely included in the third quadrant Y3. Thus, deterioration of the uniformity of the non-pneumatic tire 501 can be further suppressed.

As shown in Fig. 17, the communication device 506 of the present embodiment is held by the ring member 503 so as to be included in an overlap opposing region X2 that is a region in the tire circumferential direction B and opposes the overlap region X1 in the tire radial direction C.

More specifically, the communication device 506 of the present embodiment is embedded in the outer tubular body 512 so as to be included in the overlap opposing region X2. Thus, deterioration of the uniformity of the non-pneumatic tire 501 can be still further suppressed.

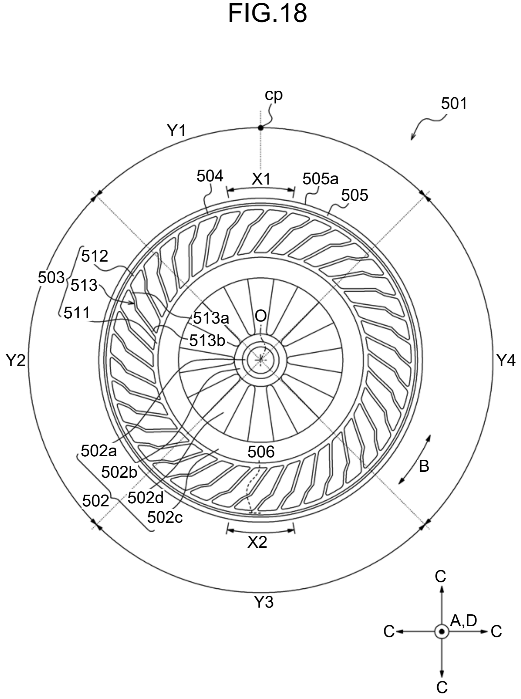

From the viewpoint of suppressing deterioration of the uniformity, the communication device 506 is particularly preferably held by the ring member 503 so as to be entirely included in the overlap opposing region X2 as shown in Fig. 18. In the example shown in Fig. 18, the communication device 506 is embedded in the outer tubular body 512 so as to be entirely included in the overlap opposing region X2.

As described above, in the non-pneumatic tire 501, from the viewpoint of suppressing deterioration of the uniformity, the position in the tire circumferential direction B at which the communication device 506 is disposed is determined by the relation to the position of the overlap region X1 of the spiral reinforcing layer 504 in the tire circumferential direction B.

The communication device 506 of the present embodiment is embedded in the outer tubular body 512 and thus held by the outer tubular body 512, but is not limited to this configuration. The communication device 506 may be held by the inner tubular body 511 or the connecting member 513. However, from the viewpoint of suppressing deterioration of the uniformity in the relation to the overlap region X1 of the spiral reinforcing layer 504, the communication device 506 is preferably held by the outer tubular body 512 as in the present embodiment.

As described above, the RF tag as the communication device 506 of the present embodiment has an elongated shape. As shown in Figs. 11 and 12, the communication device 506 of the present embodiment is held by the ring member 503 so that a longitudinal side (a side in the same direction as the longitudinal side D of the first antenna 531 and the second antenna 532 and, hereinafter, referred to as "longitudinal side D" in the present embodiment) of the communication device 506 is along the tire width direction A. The ring member 503 receives a force from a road surface at the time of vehicle traveling and deforms in the tire radial direction C. At this time, the variation in the deformation amount in the tire radial direction C due to the position in the tire circumferential direction B is larger than the variation in the deformation amount in the tire radial direction C due to the position in the tire width direction A. Therefore, in a case in which the communication device 506 is held by the ring member 503 so that the longitudinal side D of the elongated communication device 506 is along the tire width direction A, it is possible to suppress local deformation, damage, breakage, or the like caused by concentration of a stress on a part of the longitudinal side D of the communication device 506. That is, the durability of the communication device 506 can be higher than in the case of disposing the communication device 506 so that the longitudinal side D is along the tire circumferential direction B.

The phrase "along the tire width direction A" as used herein is not limited to the case of being parallel to the tire width direction A, and includes the case of being inclined at an angle of less than 45 degrees with respect to the tire width direction A. However, as in the present embodiment, the communication device 506 is preferably disposed so that the longitudinal side D of the communication device 506 is parallel to the tire width direction A or inclined at an angle of 5 degrees or less with respect to the tire width direction A to be substantially parallel to the tire width direction A.

As shown in Figs. 11 and 12, the communication device 506 of the present embodiment is embedded in the outer tubular body 512 so that at least a part of the communication device 506 is included in a connecting region X3 to which the connecting member 513 is connected in the outer tubular body 512 of the ring member 503. Here, the term "connecting region X3" means a region, in the outer tubular body 512, covered with a virtual end surface 513a1 of the outer end portion 513a of the connecting member 513 in the tire radial direction C in a case in which the outer tubular body 512 and the connecting member 513 in a state of being connected are separated into two at a boundary set on a virtual inner circumferential surface 512a of the outer tubular body 512.

In the outer tubular body 512, the connecting region X3 has a larger rigidity in the tire radial direction C than a region other than the connecting region X3, and deformation in the tire radial direction C can be suppressed. Therefore, in a case in which at least a part of the communication device 506 is disposed in the connecting region X3 of the outer tubular body 512, deformation and damage of the communication device 506 due to deformation of the outer tubular body 512 in the tire radial direction C can be suppressed as compared with a configuration in which the communication device is entirely disposed in a region other than the connecting region X3.

In a case in which the non-pneumatic tire 501 has a configuration in which the connecting member 513 is compressed and deformed in the tire radial direction C at a position between the wheel member 502 and a road surface to support the load of the vehicle (so-called "bottom load" configuration), a region other than the connecting region X3 in the outer tubular body 512 is more easily buckled and deformed by a force received from a road surface than the connecting region X3 in the outer tubular body 512. Therefore, in a case where the non-pneumatic tire 501 has a so-called "bottom load" configuration, at least a part of the communication device 506 is particularly preferably disposed in the connecting region X3 of the outer tubular body 512. Thus, deformation and damage of the communication device 506 due to buckling deformation of the outer tubular body 512 can be suppressed.

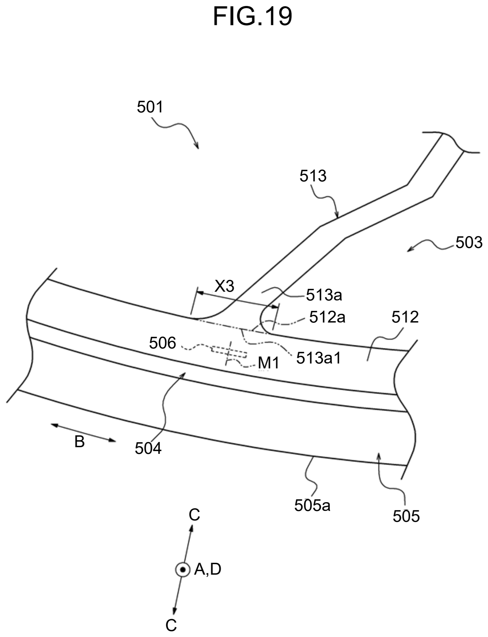

As shown in Fig. 11, from the viewpoint of suppressing deformation and damage of the communication device 506, the communication device 506 is preferably embedded in the outer tubular body 512 so that at least a center position M1 in the tire circumferential direction B is included in the connecting region X3. As shown in Fig. 19, from the viewpoint of suppressing deformation and damage of the communication device 506, the communication device 506 is more preferably embedded in the outer tubular body 512 so that the communication device 506 is entirely included in the connecting region X3. As shown in Fig. 19, such a disposition can be easily realized by disposing the longitudinal side D of the communication device 506 along the tire width direction A in a case in which the connecting member 513 is a plate-shaped portion used as a plate spring and the communication device 506 has an elongated shape having the longitudinal side D.

The non-pneumatic tire according to the disclosure is not limited to the specific configurations shown in the above-described embodiments and modifications, and various modifications, changes, and combinations can be made without departing from the scope of the claims.

### [Contribution to sustainable development goals (SDGs) led by United Nations]

SDGs have been proposed to realize a sustainable society. An embodiment of the disclosure is considered to be a technology that can contribute to "No. 12 Responsible Consumption and Production", "No. 13 Climate Action", and the like.

Next, the following supplementary notes regarding the present embodiment will be disclosed.

### <Supplementary Note 1>

[1] A tire, including:
   a tire frame member including a bead portion, a side portion continuous with a tire radial direction outer side of the bead portion, and a crown portion continuous with a tire width direction inner side of the side portion, the tire frame member being circular;
   a spiral belt disposed at a tire radial direction outer side of the crown portion, the spiral belt being formed by spirally winding, in a tire circumferential direction, a covered cord comprising one or a plurality of reinforcing cords covered with a resin or rubber; and
   an RF tag disposed in a second divided region located at an opposite side from a first divided region in a tire radial direction, the first divided region including a region in which one end portion and another end portion of the covered cord overlap with each other in the tire circumferential direction, and the first divided region and the second divided region being included among divided regions that are regions at the tire radial direction outer side of the crown portion and that divide the tire frame member into four in the tire circumferential direction.
      In the tire of [1], the RF tag is disposed in the second divided region located at the side, in the tire radial direction, opposite from the first divided region including the region in which the one end portion and the other end portion of the covered cord overlap with each other in the tire circumferential direction in the divided regions that divide the tire frame member into four in the tire circumferential direction. Thus, in the tire, the weight difference between the first divided region and the second divided region is smaller than in a case in which, for example, the RF tag is disposed in the first divided region, and thus deterioration of uniformity is suppressed.
[2] The tire according to [1], in which at least a part of the RF tag is disposed in a second circumferential direction region corresponding to a first circumferential direction region that is a region in which the one end portion and the another end portion of the covered cord overlap with each other in the tire circumferential direction, the second circumferential direction region being located at an opposite side from the first circumferential direction region in the tire radial direction.
   In the tire of [2], at least a part of the RF tag is disposed in the second circumferential direction region located at a side, in the tire radial direction, opposite from the first circumferential direction region in which the one end portion and the other end portion of the covered cord overlap with each other in the tire circumferential direction. Thus, in the tire, the weight difference between the first circumferential direction region and the second circumferential direction region is smaller than in a case in which, for example, at least a part of the RF tag is disposed in the first circumferential direction region, and thus deterioration of uniformity is suppressed.
[3] The tire according to [2], in which the RF tag is entirely disposed in the second circumferential direction region.
   In the tire of [3], the RF tag is entirely disposed in the second circumferential direction region, and therefore the weight difference between the first circumferential direction region and the second circumferential direction region can be further reduced.
[4] The tire according to any one of [1] to [3], in which the RF tag is disposed at a side of the spiral belt.
   In the tire of [4], the RF tag is disposed at the side of the spiral belt, and therefore the RF tag is less covered with the spiral belt than in a case in which, for example, the RF tag is disposed between the spiral belt and the crown portion, so that deterioration of the reception sensitivity of the RF tag is suppressed.
[5] The tire according to any one of [1] to [4], in which the covered cord is formed by covering the one or the plurality of the reinforcing cords with a resin.
   In the tire of [5], the reinforcing cord is covered with the resin, and thus the tire weight can be reduced.
[6] The tire according to any one of [1] to [5], in which the tire frame member is formed from a resin material.
   In the tire of [6], the tire frame member is formed from the resin material, and thus the tire weight can be reduced.
[7] The tire according to [6], in which:
   the RF tag includes a resin case having flexibility, and an RFID chip and an antenna housed in the case, and
   the case is welded to the crown portion.
      In the tire of [7], the case housing the RFID chip and the antenna is welded to the crown portion, and thus the RF tag can be easily and firmly attached to the tire frame member.

### <Supplementary Note 2>

[1] A non-pneumatic tire, including:
   a wheel member attachable to an axle;
   a ring member fitted to the wheel member;
   a spiral reinforcing layer formed by spirally winding an element wire body in which one or a plurality of cords parallel to each other are embedded in a covering body at an outer circumferential surface of the ring member;
   a tread member surrounding an outer side, in a tire radial direction, of the spiral reinforcing layer; and
   a communication device held by the ring member, wherein:
      the spiral reinforcing layer includes an overlap region in which one end portion and another end portion of the element wire body overlap with each other in a tire circumferential direction, and
      the communication device is held by the ring member so as to be included in a third quadrant that is not adjacent to a first quadrant in the tire circumferential direction, the first quadrant and the third quadrant being defined such that a region in the tire circumferential direction is divided into the first quadrant, a second quadrant, the third quadrant, and a fourth quadrant, each having a center angle with respect to a tire center axis of 90 degrees, and a central position of the overlap region in the tire circumferential direction coincides with a central position of the first quadrant in the tire circumferential direction.
[2] The non-pneumatic tire according to [1], in which the communication device is held by the ring member so as to be entirely included in the third quadrant.
[3] The non-pneumatic tire according to [1] or [2], in which the communication device is held by the ring member so as to be included in an overlap opposing region that is a region in the tire circumferential direction and that opposes the overlap region in the tire radial direction.
[4] The non-pneumatic tire according to claim [3], in which the communication device is held by the ring member so as to be entirely included in the overlap opposing region.
[5] The non-pneumatic tire according to any one of [1] to [4], in which:
   the communication device has an elongated shape, and
   the communication device is held by the ring member so as to have a longitudinal side following a tire width direction.
[6] The non-pneumatic tire according to any one of [1] to [5], in which:
   the ring member includes:
   an inner tubular body fitted to the wheel member;
   an outer tubular body surrounding a tire radial direction outer side of the inner tubular body; and
   a connecting member connecting the inner tubular body and the outer tubular body and being elastically deformable between the inner tubular body and the outer tubular body, and
   the communication device is held by the outer tubular body.
[7] The non-pneumatic tire according to any one of [1] to [6], in which the communication device is an RF tag.

All documents, patent applications, and technical standards described herein are incorporated herein by reference to the same extent as in a case in which each document, patent application, and technical standard are specifically and individually stated to be incorporated herein by reference.

The disclosure of Japanese Patent Application No. 2023-209536 filed on December 12, 2023 and Japanese Patent Application No. 2023-210557 filed on December 13, 2023 is incorporated herein by reference in its entirety.

### Industrial Applicability

The disclosure relates to a tire and a non-pneumatic tire.

## Claims

1. A tire, comprising:
a tire frame member including a bead portion, a side portion continuous with a tire radial direction outer side of the bead portion, and a crown portion continuous with a tire width direction inner side of the side portion, the tire frame member being circular;
a spiral belt disposed at a tire radial direction outer side of the crown portion, the spiral belt being formed by spirally winding, in a tire circumferential direction, a covered cord comprising one or a plurality of reinforcing cords covered with a resin or rubber; and
an RF tag disposed in a second divided region located at an opposite side from a first divided region in a tire radial direction, the first divided region including a region in which one end portion and another end portion of the covered cord overlap with each other in the tire circumferential direction, and the first divided region and the second divided region being included among divided regions that are regions at the tire radial direction outer side of the crown portion and that divide the tire frame member into four in the tire circumferential direction.

2. The tire according to claim 1, wherein at least a part of the RF tag is disposed in a second circumferential direction region corresponding to a first circumferential direction region that is a region in which the one end portion and the another end portion of the covered cord overlap with each other in the tire circumferential direction, the second circumferential direction region being located at an opposite side from the first circumferential direction region in the tire radial direction.

3. The tire according to claim 2, wherein the RF tag is entirely disposed in the second circumferential direction region.

4. The tire according to any one of claims 1 to 3, wherein the RF tag is disposed at a side of the spiral belt.

5. The tire according to any one of claims 1 to 4, wherein the covered cord is formed by covering the one or the plurality of the reinforcing cords with a resin.

6. The tire according to any one of claims 1 to 5, wherein the tire frame member is formed from a resin material.

7. The tire according to claim 6, wherein:
the RF tag includes a resin case having flexibility, and an RFID chip and an antenna housed in the case, and
the case is welded to the crown portion.

8. A non-pneumatic tire, comprising:
a wheel member attachable to an axle;
a ring member fitted to the wheel member;
a spiral reinforcing layer formed by spirally winding an element wire body in which one or a plurality of cords parallel to each other are embedded in a covering body at an outer circumferential surface of the ring member;
a tread member surrounding an outer side, in a tire radial direction, of the spiral reinforcing layer; and
a communication device held by the ring member, wherein:
the spiral reinforcing layer includes an overlap region in which one end portion and another end portion of the element wire body overlap with each other in a tire circumferential direction, and
the communication device is held by the ring member so as to be included in a third quadrant that is not adjacent to a first quadrant in the tire circumferential direction, the first quadrant and the third quadrant being defined such that a region in the tire circumferential direction is divided into the first quadrant, a second quadrant, the third quadrant, and a fourth quadrant, each having a center angle with respect to a tire center axis of 90 degrees, and a central position of the overlap region in the tire circumferential direction coincides with a central position of the first quadrant in the tire circumferential direction.

9. The non-pneumatic tire according to claim 8, wherein the communication device is held by the ring member so as to be entirely included in the third quadrant.

10. The non-pneumatic tire according to claim 8 or 9, wherein the communication device is held by the ring member so as to be included in an overlap opposing region that is a region in the tire circumferential direction and that opposes the overlap region in the tire radial direction.

11. The non-pneumatic tire according to claim 10, wherein the communication device is held by the ring member so as to be entirely included in the overlap opposing region.

12. The non-pneumatic tire according to any one of claims 8 to 11, wherein:
the communication device has an elongated shape, and
the communication device is held by the ring member so as to have a longitudinal side following a tire width direction.

13. The non-pneumatic tire according to any one of claims 8 to 12, wherein:
the ring member includes:
an inner tubular body fitted to the wheel member;
an outer tubular body surrounding a tire radial direction outer side of the inner tubular body; and
a connecting member connecting the inner tubular body and the outer tubular body and being elastically deformable between the inner tubular body and the outer tubular body, and
the communication device is held by the outer tubular body.

14. The non-pneumatic tire according to any one of claims 8 to 13, wherein the communication device is an RF tag.
